(19) Europäisches Patentamt
European Patent Office
Office européen des brevets

(11) **EP 3 189 928 B1**

(12) **EUROPÄISCHE PATENTSCHRIFT**

(45) Veröffentlichungstag und Bekanntmachung des Hinweises auf die Patenterteilung:
**11.11.2020 Patentblatt 2020/46**

(21) Anmeldenummer: **16186138.0**

(22) Anmeldetag: **29.08.2016**

(51) Int Cl.:
*B23K 26/402* *(2014.01)*       *B23K 26/57* *(2014.01)*
*B23K 26/354* *(2014.01)*       *B44D 3/16* *(2006.01)*
*C23G 5/00* *(2006.01)*        *B21D 51/26* *(2006.01)*
*B23K 11/34* *(2006.01)*        *B08B 7/00* *(2006.01)*

(54) **VERFAHREN ZUM ENTFERNEN EINER AN DER OBERFLÄCHE EINES VERZINNTEN STAHLBLECHS HAFTENDEN BESCHICHTUNG AUS EINEM ORGANISCHEN MATERIAL**

METHOD FOR REMOVING A COATING MADE OF AN ORGANIC MATERIAL STUCK TO THE SURFACE OF A TIN-PLATED STEEL SHEET

PROCEDE D'ELIMINATION D'UN REVETEMENT ADHERENT A LA SURFACE D'UNE TOLE D'ACIER ETAMEE D'UN MATERIAU ORGANIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.01.2016 DE 102016100157**

(43) Veröffentlichungstag der Anmeldung:
**12.07.2017 Patentblatt 2017/28**

(73) Patentinhaber: **ThyssenKrupp Rasselstein GmbH 56626 Andernach (DE)**

(72) Erfinder:
• **TSCHAGE, Andreas**
 **56410 Montabaur (DE)**
• **Liebscher, Benjamin**
 **56412 Welschneudorf (DE)**

(74) Vertreter: **Charrier Rapp & Liebau Patentanwälte PartG mbB Fuggerstraße 20 86150 Augsburg (DE)**

(56) Entgegenhaltungen:
WO-A1-98/02261          WO-A1-2015/192220
DE-A1- 4 313 871         US-A1- 2007 051 469
US-A1- 2011 095 107

**Beschreibung**

Die Erfindung betrifft ein Verfahren zum Entfernen einer an der Oberfläche eines verzinnten Stahlblechs haftenden Beschichtung aus einem organischen Material.

Zur Herstellung von Dosenrümpfen für dreiteilige Dosen, beispielsweise für Konserven- oder Getränkedosen, wird verzinnter Verpackungsstahl (Weißblech) eingesetzt. Zur Verbesserung der Korrosionsbeständigkeit von Weißblech ist es bekannt, die Weißblechoberfläche mit einer organischen Beschichtung zu beschichten, beispielsweise einem organischen Lack oder einer Polymerbeschichtung aus einem Polymermaterial wie z.B. Polyethylenterephthalat (PET), Polypropylen (PP) oder Polyethylen (PE). Solche organische Beschichtungen auf der Weißblechoberfläche sind insbesondere dann erforderlich, wenn der Inhalt der Dose säurehaltig ist und das Dosenmaterial daher säurebeständig sein muss. Hierfür wird dann zumindest die Seite des Weißblechs mit einer organischen Beschichtung versehen, welche nach der Dosenherstellung die Innenseite der Dose bildet. Aus dem Stand der Technik sind auch beidseitig beschichtete Weißbleche bekannt.

Bei der Herstellung von dreiteiligen Dosen wird eine mit einer organischen Beschichtung versehene Weißblechzarge zur Ausbildung des Dosenrumpfs zu einem Zylindermantel gerollt und an einer Längsnaht verschweißt, beispielsweise durch elektrisches Widerstandsschweißen, insbesondere Widerstandsrollennahtschweißen bzw. Rollennahtquetschschweißen. Hierzu muss die Zinnoberfläche des Weißblechs in den Schweißbereichen frei von organischen Beschichtungen sein. Um dies zu gewährleisten, ist es beispielsweise aus dem Stand der Technik bekannt, beim Lackieren des Weißblechs in den Bereichen der Weißblechoberfläche, welche bei der späteren Dosenherstellung einen Schweißbereich bilden, lackfreie Aussparungen vorzusehen. Dies ist produktionstechnisch aufwändig und verteuert das Lackierverfahren. In der WO 98/02261 A1 ist ein Verfahren zur Herstellung von rohrförmigen Dosenkörpern für dreiteilige Dosen aus einem Metallsubstrat mit einer Polymerbeschichtung beschrieben, wobei zur Ausbildung einer Schweißnaht Ränder der Polymerbeschichtung durch Einstrahlung einer gepulsten Laserstrahlung mit Pulsdauern von weniger als 10 μs entfernt werden ohne dabei das Metallsubstrat zu beschädigen.

Bei der Beschichtung von Weißblechen mit einem Polymermaterial, beispielsweise durch Auflaminieren einer PET-Folie oder durch Direktextrusion eines schmelzflüssigen Polymermaterials wie PE oder PP, wird die Weißblechoberfläche vollflächig mit der Polymerbeschichtung beschichtet. Um in den Schweißbereichen der Weißblechzargen beschichtungsfreie (polymerfreie) Aussparungen vorzusehen, ist es deshalb erforderlich, nach dem Aufbringen der Polymerbeschichtung auf die Weißblechoberfläche die Polymerbeschichtung in den Schweißbereichen wieder zu entfernen. Dies kann beispielsweise mit einem Laser erfolgen, mit dem eine elektromagnetische Strahlung, die von der Polymerbeschichtung absorbiert wird, in die Polymerbeschichtung eingestrahlt wird, um diese zu verbrennen. Beim Verbrennen der Polymerbeschichtung entstehen allerdings auf der Weißblechoberfläche verbrannte Polymerrückstände. Diese sind beim späteren Verschweißen der Schweißbereiche störend und müssen deshalb chemisch entfernt werden.

Es besteht daher ein Bedürfnis für ein einfaches und schnelles Verfahren zum Entfernen einer an der Oberfläche eines verzinnten Stahlblechs (Weißblechs) haftenden Beschichtung aus einem organischen Material, insbesondere eines organischen Lacks oder einer Polymerbeschichtung, mit dem Aussparungen an der Oberfläche des verzinnten Stahlblechs erzeugt werden können, die frei von organischem Material sind, damit das verzinnte Stahlblech im Bereich dieser Aussparungen geschweißt werden kann. Das Verfahren soll dabei zweckmäßig ohne eine Reinigung unter Verwendung von Chemikalien auskommen. Diese Aufgaben werden mit dem Verfahren gemäß Anspruch 1 gelöst. Bevorzugte Ausführungsformen des Verfahrens sind den abhängigen Ansprüchen zu entnehmen.

In dem erfindungsgemäßen Verfahren wird in vorgegebenen, insbesondere streifenförmigen Bereichen auf der Oberfläche eines verzinnten und mit einer organischen Beschichtung versehenen Stahlblechs eine elektromagnetische Strahlung mit einer vorgegebenen Wellenlänge eingestrahlt, für welche die organische Beschichtung zumindest im Wesentlichen transparent ist. Die durch die elektromagnetische Strahlung in den vorgegebenen Bereichen eingestrahlte Energiedichte wird dabei so ausgewählt, dass die Zinnschicht des verzinnten Stahlblechs in den bestrahlten Bereichen auf- oder zumindest angeschmolzen wird. Durch das Auf- oder Anschmelzen der Zinnschicht löst sich zunächst die organische Beschichtung von der Zinnschicht ab und kann dann in einem abschließenden Schritt des erfindungsgemäßen Verfahrens leicht von der nach dem Auf- oder Anschmelzen wieder erstarrten Zinnschicht entfernt werden. Das Entfernen des organischen Materials der von der Zinnschicht abgelösten Beschichtung kann beispielsweise durch Absaugen oder Abblasen erfolgen. Die Verwendung einer Chemikalie, wie z.B. einer chemischen Reinigungslösung, ist dabei nicht erforderlich.

Die von der elektromagnetischen Strahlung in die Zinnschicht eingestrahlte Energiedichte wird zweckmäßig so ausgewählt und eingestellt, dass die Zinnschicht zumindest oberflächlich auf Temperaturen oberhalb des Schmelzpunkts des Zinns erwärmt und dadurch oberflächlich angeschmolzen oder die Zinnschicht über ihre gesamte Dicke (bis zum Stahlblech) aufgeschmolzen wird.

Um ein Aufheizen des Stahlblechs und damit thermische Belastungen zu verhindern und um die an- oder aufgeschmolzene Zinnschicht schnell wieder wieder erstarren zu lassen, erfolgt das Einstrahlen der elektromagnetischen Strahlung zweckmäßig nur über eine vorgegebene und begrenzte Bestrahlungsdauer. Nach Beendigung der Einstrahlung kann die angeschmolzene Oberfläche der Zinnschicht bzw. die gesamte aufgeschmolzene Zinnschicht rasch wieder erstarren, wobei ein schneller und automatischer Temperaturausgleich mit dem noch kalten Kern des Stahlblechs durch Wärmeleitung erfolgt. Durch das An- oder Aufschmelzen der Zinnschicht löst sich die auf der Zinnschicht haftende organische Beschichtung von der Zinnoberfläche ab und bleibt auch noch nach dem Erstarren der an- oder aufgeschmolzenen Zinnschicht von dieser getrennt und kann daher nach dem Erstarren der Zinnschicht problemlos entfernt werden.

Es hat sich gezeigt, dass es sogar möglich ist, durch Erhöhung der Energiedichte der eingestrahlten elektromagnetischen Strahlung die organische Beschichtung von der Zinnschicht des verzinnten Stahlblechs abzusprengen. Wenn die durch die elektromagnetische Strahlung eingestrahlte Energiedichte hoch genug ist, um das Zinn der Zinnschicht oberflächlich zu verdampfen, erfolgt ein spontanes Absprengen der organischen Beschichtung von der Zinnschicht. Es hat sich gezeigt, dass hierfür bei einer Bestrahlungszeit von 30 ns Energiedichten von mehr als 4 $J/cm^2$ erforderlich sind.

Entsprechend hohe Energiedichten werden zweckmäßig von einem gepulsten Laser erzeugt, um die thermische Belastung des Stahlblechs möglichst gering zu halten und bspw. thermisch bedingte Verformungen zu vermeiden. Hierfür werden gepulste Laser mit einer Pulsfrequenz im Bereich von 1 - 100 kHz und einer Pulslänge im Bereich von 1 - 1000 ns und bevorzugt von 10 - 100 ns eingesetzt.

Die Wellenlänge der elektromagnetischen Strahlung liegt bevorzugt im nahen Infrarot (NIR) und insbesondere im Bereich von 0,8 - 2,5 $\mu$m. In diesem Wellenlängenbereich sind die herkömmlich für die organische Beschichtung von Weißblechen verwendeten organischen Materialien, wie z.B. organische Lacke, wie Vinyl-, Epoxy- oder Epoxyphenolharz-Lacke und die Polymermaterialien PET, PP und PE zumindest im Wesentlichen transparent. Unter Transparent wird hierbei verstanden, dass der Transmissionsgrad des organischen Materials der Beschichtung für die Wellenlänge der verwendeten elektromagnetischen Strahlung höher als 75 % ist. Dadurch wird gewährleistet, dass die elektromagnetische Strahlung zumindest weitgehend absorptionsfrei durch die organische Beschichtung durchtritt und im Wesentlichen an der Grenzfläche zwischen der Oberfläche der Zinnschicht und der organischen Beschichtung wirkt, um die Zinnschicht zumindest oberflächlich anzuschmelzen oder über ihre gesamte Dicke aufzuschmelzen. Die organische Beschichtung wird dabei durch die Bestrahlung nicht oder zumindest kaum beeinflusst. Insbesondere erfolgt kein Verbrennen des organischen Materials, weshalb keine organischen Brennrückstände entstehen.

Diese und weitere Vorteile und Merkmale der Erfindung ergeben sich aus dem nachfolgend unter Bezugnahme auf die begleitenden Zeichnungen näher beschriebenen Ausführungsbeispiel. Die Zeichnungen zeigen:

**Figur 1:** eine schematische Darstellung des erfindungsgemäßen Verfahrens am Beispiel einer Weißblechtafel mit einer organischen Beschichtung, welche in vorgegebenen Bereichen mit dem erfindungsgemäßen Verfahren von der Weißblechoberfläche zur Ausbildung von Aussparungen entfernt wird;

**Figur 2:** ein Diagramm, welches den Zusammenhang der verbleibenden Zinnauflage des verzinnten Stahlblechs (Weißblechs) und der bei dem erfindungsgemäßen Verfahren in die Zinnschicht eingestrahlten Energiedichte der elektromagnetischen Strahlung darstellt;

**Figur 3:** Detaildarstellung einer Aussparung in der organischen Beschichtung einer Weißblechzarge, wobei sich in Figur 3a die Aussparung am Rand und in Figur 3b in der Mitte der Weßblechzarge befindet;

**Figur 4:** einen Querschnitt durch ein mit einer organischen Beschichtung beschichtetes Weißblech.

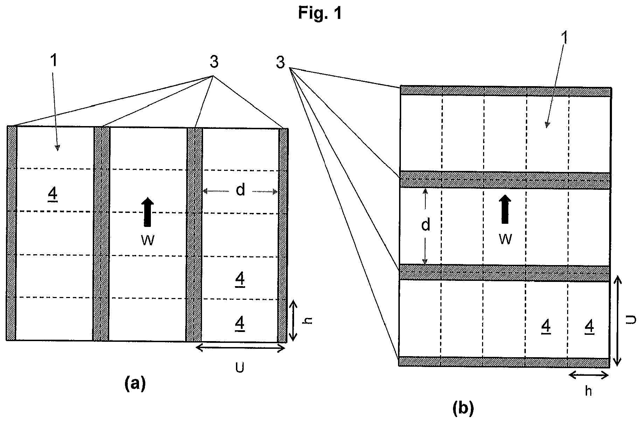

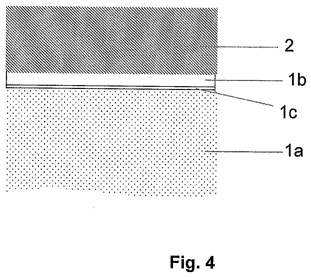

In den Figuren 1a und 1b sind zwei Ausführungsvarianten für die Durchführung des erfindungsgemäßen Verfahrens an einer mit einem organischen Material beschichteten Weißblechtafel gezeigt. Ein beidseitig mit einer organischen Beschichtung 2 versehenes Weißblech 1 (verzinntes Stahlblech) ist in Figur 4 im Querschnitt gezeigt. Aus Figur 4 ist der Schichtaufbau ersichtlich, der das Stahlblech 1a, die beidseitig darauf aufgebrachte Zinnschicht 1b sowie die auf der Zinnschicht 1b haftende organische Beschichtung 2 umfasst. Die Zinnschicht 1b ist bevorzugt elektrolytisch auf das Stahlblech 1a aufgebracht. Zweckmäßig wurde die Zinnschicht 1b nach dem elektrolytischen Auftragen auf das Stahlblech 1a zumindest teilweise aufgeschmolzen, so dass sich an der Grenzfläche zwischen der Zinnschicht 1b und dem Stahlblech 1a eine Legierungsschicht 1c ausbildet, die aus Eisenatomen des Stahls und Zinnatomen der Zinnschicht 1b besteht. Diese Legierungsschicht bewirkt eine gute Haftung der Zinnschicht 1b am Stahlblech 1a und erhöht die Korrosionsbeständigkeit des Weißblechs 1.

Die an der Oberfläche der Zinnschicht 1b haftende Beschichtung 2 besteht aus einem organischen Material. Bei dem organischen Material kann es sich beispielsweise um einen organischen Lack, wie z.B. einem Vinyl-, Epoxy- oder Epoxyphenolharz-Lack handeln. Die organische Beschichtung 2 kann auch aus einem Polymermaterial wie z.B. Polyethylenterephthalat (PET), Polypropylen (PP) oder Polyethylen (PE) gebildet sein. Die Polymerbeschichtung kann dabei beispielsweise durch Auflaminieren einer Polymerfolie, insbesondere einer PET-, PP- oder einer PE-Folie, oder durch Direktextrusion eines schmelzflüssigen Polymermaterials wie PET, PE oder PP aufgebracht werden.

Mit dem erfindungsgemäßen Verfahren wird die an der Zinnschicht 1b des Weißblechs 1 haftende organische Beschichtung 2 in vorgegebenen Bereichen entfernt, um Aussparungen an der Oberfläche des beschichteten Weißblechs zu erzeugen, welche frei von organischem Material sind. Die erzeugten Aussparungen können bei der späteren Fertigung von dreiteiligen Dosen Schweißbereiche bilden, an denen das Weißblech zur Herstellung von Dosenrümpfen verschweißt werden kann.

In dem in Figur 1a gezeigten Ausführungsbeispiel sind streifenförmige Aussparungen 3 vorgesehen, deren Längsrichtung parallel zur Walzrichtung W des Stahlblechs 1a verläuft und welche quer zur Walzrichtung W in einem vorgegebenen Abstand d zueinander verlaufen. Aus dem in Figur 1a gezeigten Weißblech 1 werden nach Durchführung des erfindungsgemäßen Verfahrens, in dem die Aussparungen 3 an der Weißblechoberfläche erzeugt werden, zu Blechzargen 4 geschnitten. Die hierfür vorzunehmenden Schnitte sind in Figur 1a gestrichelt gezeigt. Jede der so aus dem Weißblech 1 ausgeschnittenen Zarge 4 kann zur Herstellung eines Dosenrumpfs für eine dreiteilige Dose verwendet werden, wobei die Zarge 4 hierfür zu einem Zylindermantel gebogen und an ihren Rändern zusammengeschweißt wird. Die Ränder jeder Zarge 4, welche bei der Herstellung des Dosenrumpfs zusammengeschweißt werden, weisen die mit dem erfindungsgemäßen Verfahren erzeugten Aussparungen 3 auf, welche frei von organischem Material sind, so dass die Bereiche der Aussparungen 3 miteinander verschweißt werden können. In Figur 1a ist bei der rechten Zarge 4 in der untersten Reihe die Höhe h und der Umfang U des Dosenrumpfs eingezeichnet, der aus dieser Zarge 4 gebildet wird.

In entsprechender Weise können mit dem erfindungsgemäßen Verfahren auch Aussparungen 3 an der Oberfläche des Weißblechs 1 erzeugt werden, welche quer zur Walzrichtung W des Stahlblechs 1 verlaufen und in Walzrichtung W einen vorgegebenen Abstand d aufweisen. Diese Ausführungsvariante des erfindungsgemäßen Verfahrens ist in Figur 1b gezeigt. Auch bei dieser Ausführungsvariante werden nach der Erzeugung der Aussparungen 3 Zargen 4 aus dem Weißblech 1 ausgeschnitten, welche zur Herstellung eines Dosenrumpfs an den Rändern, welche die Aussparungen 3 enthalten, längs einer Schweißnaht verschweißt werden.

Zur Erzeugung der Aussparungen 3 an der Oberfläche des beschichteten Weißblechs 1 wird zunächst die an der Oberfläche der Zinnschicht 1b haftende Beschichtung 2 von der Zinnschicht 1b abgelöst, indem eine elektromagnetische Strahlung hoher Energiedichte, beispielsweise eine Laserstrahlung, auf die Oberfläche des beschichteten Weißblechs 1 eingestrahlt wird. Die Wellenlänge der elektromagnetischen Strahlung, welche zweckmäßig monochrom ist, wird dabei so ausgewählt, dass die organische Beschichtung 2 für diese Strahlung der ausgewählten Wellenlänge zumindest im Wesentlichen transparent ist. Dadurch soll gewährleistet werden, dass die eingestrahlte elektromagnetische Strahlung die organische Beschichtung 2 zumindest im Wesentlichen vollständig ohne Absorption durchdringt und daher in den Bereich der Zinnschicht 1b gelangt. Hierfür reicht es aus, wenn die Transmission der organischen Beschichtung 2 für die ausgewählte Wellenlänge der elektromagnetischen Strahlung bei mindestens 75 % liegt.

Die Energiedichte der eingestrahlten elektromagnetischen Strahlung und die Bestrahlungszeit wird so ausgewählt, dass die Zinnschicht 1b durch das Einstrahlen der elektromagnetischen Strahlung zumindest oberflächlich auf Temperaturen oberhalb des Schmelzpunkts des Zinns (232°C) erwärmt wird. Dadurch wird die Zinnschicht 1b zumindest oberflächlich angeschmolzen. Bei einer genügend hohen Eindringtiefe der elektromagnetischen Strahlung und genügend langer Bestrahlungszeit kann die Zinnschicht 1b auch vollständig über ihre gesamte Dicke auf Temperaturen oberhalb des Zinnschmelzpunkts erwärmt und damit vollständig aufgeschmolzen werden.

Damit die oberflächlich angeschmolzene oder vollständig aufgeschmolzene Zinnschicht 1b wieder erstarren kann, wird die Einstrahlung der elektromagnetischen Strahlung nach einer vorgegebenen Bestrahlungsdauer beendet. Die Bestrahlungsdauern liegen im Bereich von 1 Nanosekunden bis 1000 Nanosekunden (ns), bevorzugt zwischen 10 und 100 ns und insbesondere bei einer Referenz-Bestrahlungsdauer von 30 ns. Die eingestrahlte Energiedichte e der Strahlung wird dabei bevorzugt an die Bestrahlungsdauer t angepasst, wobei zwischen der Energiedichte e(t) und der Bestrahlungsdauer folgender Zusammenhang besteht:

$$e(t) = e_{Ref} \sqrt{\frac{t}{t_{Ref}}} \, ,$$

wobei

- t [ns] die Bestrahlungsdauer,
- e(t) [J/cm²] die Energiedichte bei der gewünschten Bestrahlungsdauer,
- $t_{Ref}$ = 30 ns die Referenz-Bestrahlungsdauer und $e_{Ref}$ die Referenz-Energiedichte bei der Referenz-Bestrahlungsdauer ist
- und $e_{Ref}$ zwischen 1 J/cm² und 8 J/cm² liegt.

Durch das kurzzeitige An- oder Aufschmelzen der Zinnschicht 1b löst sich die organische Beschichtung 2 von der Zinnschicht 1b ab, während diese zumindest oberflächlich schmelzflüssig ist. Nach dem Erstarren der an- oder aufgeschmolzenen Zinnschicht 1b weist die organische Beschichtung 2 keine oder nur noch eine sehr geringe Haftung an der Oberfläche der Zinnschicht 1b auf. Wegen der nicht mehr vorhandenen oder allenfalls sehr geringen Haftung kann die von der Zinnschicht 1b abgelöste Beschichtung 2 anschließend leicht entfernt werden, beispielsweise durch Abblasen mit einem Gasstrom oder durch Absaugen mit Unterdruck oder auch durch mechanische Einwirkung.

Zur Erzielung glatter Kanten an den Aussparungen 3 ist es zweckmäßig, wenn an den Rändern der Aussparungen 3 die noch auf der Zinnschicht 1b haftende und verbleibende Beschichtung 2 aus dem organischen Material abgeschnitten wird. Dies kann beispielsweise durch Laserschneiden erfolgen, wobei hierfür ein Schneidlaser mit einer Wellenlänge verwendet wird, welche von der organischen Beschichtung 2 absorbiert wird.

Es hat sich gezeigt, dass das Abschneiden der Ränder der Aussparungen 3 auch sehr effizient durch die elektromagnetische Strahlung vorgenommen werden kann, welche in dem erfindungsgemäßen Verfahren zum An- oder Aufschmelzen der Zinnschicht 1b verwendet wird. Hierfür ist eine Energiedichte von mehr als 4 $J/cm^2$ erforderlich. Wenn eine elektromagnetische Strahlung mit einer Energiedichte von mehr als 4 $J/cm^2$ eingestrahlt wird, wird die Zinnschicht 1b nicht lediglich auf Temperaturen oberhalb des Zinnschmelzpunkts erwärmt, sondern es erfolgt vielmehr ein Verdampfen des Zinns an der Oberfläche der Zinnschicht 1b. Durch das oberflächliche Verdampfen des Zinns wird die an der Zinnschicht 1b haftende Beschichtung 2 von der Zinnschicht 1b abgesprengt und löst sich dadurch selbsttätig ab, ohne dass es eines aktiven Schritts zum Entfernen des organischen Materials der Beschichtung 2 erfordert. Durch das spontane Absprengen der organischen Beschichtung löst sich der abgesprengte Bereich der Beschichtung 2 von den übrigen Bereichen der Beschichtung 2, welche noch auf der Weißblechoberfläche verbleiben soll. Ein Abschneiden der Randbereiche der Aussparungen 3 von den Bereichen der Beschichtung 2, welche noch auf der Weißblechoberfläche verbleiben, ist bei dieser Verfahrensführung nicht erforderlich.

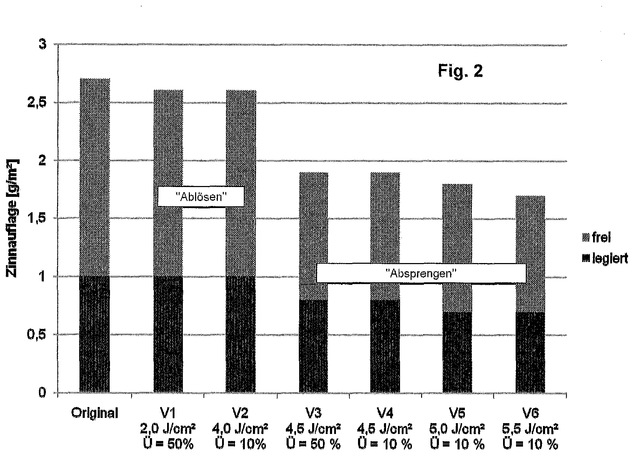

Durch Vergleichsversuche konnte ermittelt werden, dass bei einer Bestrahlungszeit von 30 ns im Bereich einer Energiedichte von 1,0 bis 4,0 $J/cm^2$ lediglich ein An- oder Aufschmelzen der Zinnschicht 1b erfolgt, wohingegen bei Energiedichten von mehr als 4 $J/cm^2$ ein spontanes Absprengen der organischen Beschichtung von der Zinnschicht 1b erfolgt, weil bei diesen hohen Energiedichten das Zinn an der Oberfläche der Zinnschicht 1b verdampft. Dies ist in dem Diagramm der Figur 2 dargestellt. Dort sind die nach der Durchführung des erfindungsgemäßen Verfahrens durch Einstrahlung elektromagnetischer Strahlung mit unterschiedlichen Energiedichten auf dem Stahlblech 1a verbleibenden Zinnauflagen (Gewichtsauflage) der Zinnschicht 1b in Abhängigkeit der eingestrahlten Energiedichte dargestellt, wobei die verbleibende Zinnauflage in der Abszisse und die eingestrahlten Energiedichten in der Ordinate des Diagramms dargestellt sind. Es zeigt sich, dass die verbleibende Zinnauflage bei Einstrahlung einer elektromagnetischen Strahlung mit Energiedichten von 4,5 $J/cm^2$ bis 5,5 $J/cm^2$ um ca. 20 % geringer sind als die verbleibenden Zinnauflagen bei einer Energiedichte im Bereich von 2 bis 4,0 $J/cm^2$. Daraus lässt sich erkennen, dass bei der Einstrahlung der hohen Energiedichten die Zinnauflage der verbleibenden Zinnschicht 1b reduziert wird, woraus sich schließen lässt, dass ein Teil der Zinnschicht 1b an der Oberfläche verdampft. In dem Diagramm der Figur 2 ist auch der legierte Anteil der Zinnauflage dargestellt, der im Bereich der Legierungsschicht mit dem Eisen des Stahls legiert worden ist.

Die Verwendung zu hoher Energiedichten bei der Einstrahlung der elektromagnetischen Strahlung zum An- oder Aufschmelzen der Zinnschicht 1b sollte verhindert werden, damit eine genügend große Menge von freiem Zinn in der Zinnschicht 1b verbleibt. Bei einer Gewichtsauflage von wenigstens 0,5 $g/m^2$ an freiem Zinn bleibt das verzinnte Stahlblech 1 gut schweißbar. Daher wird die Energiedichte der elektromagnetischen Strahlung bevorzugt auf maximal 8 $J/cm^2$ begrenzt.

Nachfolgend werden Beispiele für die Durchführung des erfindungsgemäßen Verfahrens beschrieben:

**Beispiel 1 (Vergleichsbeispiel)**

An einem Weißblech 1, welches mit einer PET-Folie beschichtet ist, wurden durch Bestrahlung mit einem $CO_2$-Laser mit einer Wellenlänge von 9,3 $\mu m$ Aussparungen 3 in der Beschichtung 2 erzeugt. Das Material der Beschichtung 2 (PET) ist für die Wellenlänge (9,3 $\mu m$) des verwendeten Lasers im Wesentlichen opak und absorbiert daher die eingestrahlte Laserstrahlung. Die Laserstrahlung wurde dabei gepulst mit einer Pulsfrequenz von 20 kHz und einem Tastverhältnis von 20 % bei einer maximalen Laserleistung von 1 kW eingestrahlt. Durch die Einstrahlung der Laserstrahlung verbrennt die auf dem Weißblech 1 auflaminierte PET-Folie. Es konnten keine Lasereinstellungen gefunden werden, bei denen die PET-Folie rückstandsfrei verbrennt und von der Weißblechoberfläche entfernt werden kann. Es verbleibt zumindest in der Mitte des lasergestrahlten Bereichs ein dünner Restfilm der PET-Folie. Diese Folienreste ließen sich auch durch nochmalige Bestrahlung nicht entfernen. Auch eine Erhöhung der Laserleistung führte nicht zu einer rückstandsfreien Entfernung sondern bei sehr hohen Laserleistungen lediglich zu nicht gewünschten thermisch induzierten Spannungen im Weißblech 1.

**Beispiel 2 (erfindungsgemäßes Beispiel)**

Dasselbe Weißblech 1 des Beispiels 1 wurde statt mit einem $CO_2$-Laser mit einem gepulsten Festkörperlaser bestrahlt, dessen Wellenlänge bei 1,03 $\mu m$ liegt. Für diese Wellenlänge ist das organische Material (PET) der Beschichtung 2 transparent, so dass die Laserstrahlung zumindest im Wesentlichen an der Grenzfläche zwischen der Zinnschicht 1b und der auflaminierten PET-Folie wirkt. Es wurden kurze Pulsdauern von 10 bis 100 ns und insbesondere von 30 ns gewählt, um bei geringer thermischer Belastung des Weißblechs 1 einen möglichst hohen Energieeintrag in die Zinnschicht 1b erzeugen zu können. Die Pulsfrequenz der gepulsten Laserstrahlung wurde im Bereich von 1 bis 100 kHz ausgewählt, insbesondere wurde eine Pulsfrequenz von 10 kHz verwendet. Der Pulsüberlapp der Laserpulse wurde im Bereich zwischen 10 % und 50 % variiert, bei einem Linienüberlapp von 10 %. Durch Variation der eingestrahlten Energiedichte und des Pulsüberlapps konnte ermittelt werden, dass bei Energiedichten oberhalb von 4 J/cm$^2$ ein spontanes Absprengen der organischen Beschichtung 2 von der Zinnschicht 1b erfolgt, wobei die Zinnschicht 1b oberflächlich verdampft ist.

Durch die Einstrahlung des gepulsten Laserstrahls der Wellenlänge 1,03 μm konnten rückstandsfrei streifenförmige Aussparungen in der Beschichtung 2 erzeugt werden. Durch die Bestrahlung des beschichteten Weißblechs 1 mit der Laserstrahlung in den Aussparungsbereichen wurde die Beschichtung 2 zunächst von der Zinnschicht 1b abgelöst und konnte danach beispielsweise durch Abblasen oder Absaugen entfernt werden.

### Beispiel 3 (erfindungsgemäßes Beispiel)

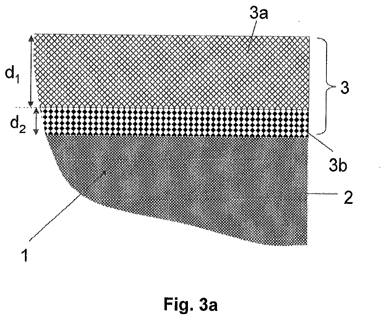

Zum Ablösen einer streifenförmigen Aussparung der Beschichtung 2 vom Weißblech 1 wurde in einem ersten Bereich 3a am Rand einer Weißblechzarge ein Streifen von ca. 4 mm Breite mit dem Laser des Beispiels 1 bei einer Energiedichte von 3 J/cm$^2$ bestrahlt, wie in Figur 3a gezeigt. Durch das Einstrahlen der Laserstrahlung mit der Energiedichte von ca. 3 J/cm$^2$ wurde die Zinnschicht 1b oberflächlich angeschmolzen, wodurch die Beschichtung 2 in diesem Bereich von der angeschmolzenen Zinnschicht abgelöst wurde. In einem sich zum Inneren der Zarge anschließenden, ebenfalls streifenförmigen zweiten Bereich 3b, wurde das Weißblech 1 mit dem Laser mit einer höheren Energiedichte von 5,0 J/cm$^2$ bestrahlt. Durch die hohe Energiedichte ist das Zinn der Zinnschicht 1b dort oberflächlich verdampft und hat zu einem spontanen Absprengen der Beschichtung 2 geführt. Dadurch wurde gleichzeitig der abgesprengte Bereich der Beschichtung 2 in dem laserbestrahlten zweiten Bereich 3b von der Beschichtung 2 abgeschnitten, die in dem nicht bestrahlten Bereich des Weißblechs noch auf der Oberfläche der Zinnschicht 1b verblieben ist. Durch diese Verfahrensführung konnte ein sauberes Abtrennen der verbleibenden Beschichtung 2 von der abgetrennten Beschichtung und dadurch eine saubere Kante der erzielten Aussparung 3 erzeugt werden. Die in den laserbestrahlten Bereichen 3a und 3b vom Weißblech abgetrennte Beschichtung konnte anschließend problemlos mit einem Luftstrom abgeblasen oder mit einer Saugvorrichtung abgesaugt werden.

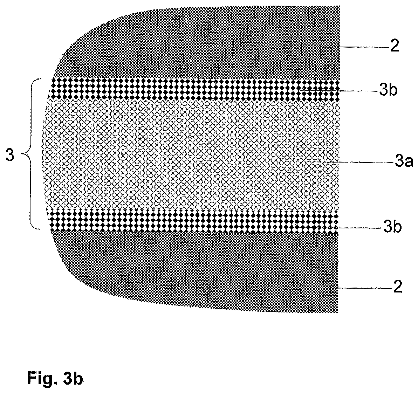

In entsprechender Weise kann eine streifenförmigen Aussparung 3 der Beschichtung 2 vom Weißblech 1 auch in der Mitte einer Weißblechzarge oder -tafel erzeugt werden, wie in Figur 3b gezeigt, wobei hier zum Abtrennen der auf der Zinnoberfläche verbleibenden Beschichtung 2 ein äußerer Bereich 3b der Aussparung 3 zum spontanen Absprengen der Beschichtung 2 mit einer höheren Energiedichte von > 4 J/cm$^2$ und der innere Bereich 3a mit einer niedrigeren Energiedichte von < 4 J/cm$^2$ bestrahlt wurde.

### Beispiel 4

Die gemäß den Beispielen 2 und 3 behandelten Weißblechproben 1 wurden nach der Durchführung des erfindungsgemäßen Verfahrens, in dem streifenförmige Aussparungen 3 an den Rändern der Weißblechzargen erzeugt worden sind, an den Bereichen der Aussparungen 3 durch Widerstandsrollennahtschweißen verschweißt. Die Weißblechzargen konnten bei den in der Produktion von 3-teiligen Dosen üblicherweise verwendeten Schweißgeschwindigkeiten problemlos längs einer Schweißnaht im Bereich der Aussparungen verschweißt werden.

### Patentansprüche

1. Verfahren zum Entfernen einer an der Oberfläche eines verzinnten Stahlblechs (1) haftenden Beschichtung (2) aus einem organischen Material, insbesondere eines organischen Lacks oder einer Polymerbeschichtung, mit folgenden Schritten:

   - Auf- oder Anschmelzen der Zinnschicht (1b) des verzinnten Stahlblechs (1a) durch Einstrahlen einer gepulsten elektromagnetischen Strahlung mit einer Pulsfrequenz im Bereich von 1 bis 100 kHz und einer Pulslänge im Bereich von 1 bis 1000 ns sowie einer vorgegebenen Wellenlänge, für welche die organische Beschichtung (2) zumindest im Wesentlichen transparent ist, wobei sich die organische Beschichtung (2) von der Zinnschicht (1b) ablöst,
   - Entfernen des organischen Materials der von der Zinnschicht (1b) abgelösten Beschichtung (2).

2. Verfahren nach Anspruch 1, wobei die Zinnschicht (1b) durch das Einstrahlen der elektromagnetischen Strahlung zumindest oberflächlich auf Temperaturen oberhalb des Schmelzpunkts des Zinns erwärmt oder die Zinnschicht (1b) über ihre gesamte Dicke aufgeschmolzen wird.

3. Verfahren nach Anspruch 1 oder 2, wobei das Einstrahlen der elektromagnetischen Strahlung über eine vorgegebene und begrenzte Bestrahlungsdauer erfolgt.

**4.** Verfahren nach Anspruch 3, wobei die auf- oder angeschmolzene Zinnschicht nach Ablauf der Bestrahlungsdauer auf Temperaturen unterhalb des Schmelzpunkts des Zinns abkühlt, wodurch die auf- oder angeschmolzene Zinnschicht wieder erstarrt.

**5.** Verfahren nach einem der voranstehenden Ansprüche, wobei sich die Beschichtung (2) durch das An- oder Aufschmelzen der Zinnschicht (1b) von der Oberfläche der Zinnschicht (1b) ablöst.

**6.** Verfahren nach einem der voranstehenden Ansprüche, wobei die Energiedichte der elektromagnetischen Strahlung so ausgewählt wird, dass das Zinn der Zinnschicht (1b) oberflächlich verdampft und dadurch die Beschichtung (2) von der Oberfläche der Zinnschicht (1b) abgesprengt wird.

**7.** Verfahren nach Anspruch 6 wobei die Energiedichte der elektromagnetischen Strahlung größer als 4 J/cm$^2$ ist und insbesondere im Bereich von 1 bis 8 J/cm$^2$ und insbesondere im Bereich von 2 bis 6 J/cm$^2$ liegt.

**8.** Verfahren nach einem der voranstehenden Ansprüche, wobei die Pulslänge im Bereich von 10 bis 100 ns, liegt.

**9.** Verfahren nach einem der voranstehenden Ansprüche, wobei die Wellenlänge der elektromagnetischen Strahlung im NIR und insbesondere im Bereich von 0,8 bis 2,5 μm liegt.

**10.** Verfahren nach einem der voranstehenden Ansprüche, wobei das verzinnte Stahlblech in Form einer Weißblechtafel oder -zarge vorliegt, an der ein oder mehrere Streifen (3) der Beschichtung (2) durch Einstrahlen der elektromagnetischen Strahlung von der Oberfläche des verzinnten Stahlblechs abgelöst werden, um auf der Weißblechtafel oder -zarge streifenförmige, beschichtungsfreie Aussparungen zu erzeugen.

**11.** Verfahren nach Anspruch 10, wobei die Breite des oder jedes Streifens (3) im Bereich von 1 bis 8 mm und insbesondere zwischen 3 und 7 mm liegt.

**12.** Verfahren nach Anspruch 7 oder 8, wobei in einem ersten Bereich (3a) des oder jedes Streifens (3) eine geringere Energiedichte und in einem zweiten Bereich (3b) des Streifens (3) eine höhere Energiedichte der elektromagnetischen Strahlung eingestrahlt wird, wobei die höhere Energiedichte ausreicht, um das Zinn der Zinnbeschichtung (1b) zumindest oberflächlich zu verdampfen und dadurch die organische Beschichtung (2) abzusprengen.

**13.** Verfahren nach einem der voranstehenden Ansprüche, wobei das Entfernen des organischen Materials der von der Zinnschicht (1b) abgelösten Beschichtung (2) durch Absaugen oder Abblasen erfolgt.

**14.** Verfahren nach einem der voranstehenden Ansprüche, wobei das organische Material der Beschichtung (2) ausgewählt ist aus einem organischen Lack, insbesondere aus der Gruppe von Vinyl-, Epoxy- oder Epoxyphenolharz-Lacke, oder Polymermaterialien, insbesondere PET, PP und PE.

**Claims**

**1.** Method for removing a coating (2) made of an organic material adhering to the surface of a tin-plated steel sheet (1), in particular an organic lacquer or a polymer coating, having the following steps:

- melting or incipient melting of the tin layer (1b) of the tin-plated steel sheet (1a) by irradiating pulsed electromagnetic radiation having a pulse frequency in the range from 1 to 100 kHz and a pulse length in the range from 1 to 1,000 ns and a predetermined wavelength for which the organic coating (2) is at least substantially transparent, wherein the organic coating (2) is released from the tin layer (1b),
- removing the organic material of the coating (2) released from the tin layer (1b).

**2.** Method according to claim 1, wherein the tin layer (1b) is heated by irradiating the electromagnetic radiation at least on the surface at temperatures above the melting point of tin or the tin layer (1b) is melted over its entire thickness.

**3.** Method according to claim 1 or 2, wherein irradiation of electromagnetic radiation is effected over a predetermined and limited irradiation time.

**4.** Method according to claim 3, wherein after passing of the irradiation time, the melted or incipiently melted tin layer cools to temperatures below the melting point of tin, whereby the melted or incipiently melted tin layer re-solidifies.

**5.** Method according to one of the preceding claims, wherein the coating (2) is released from the surface of the tin layer (1b) by incipient melting or melting of the tin layer (1b).

**6.** Method according to one of the preceding claims, wherein the energy density of the electromagnetic radiation is selected so that the tin of the tin layer (1b) is vaporised on the surface and thus the coating (2) is burst off from the surface of the tin layer (1b).

**7.** Method according to claim 6, wherein the energy density of the electromagnetic radiation is greater than 4 J/cm$^2$ and in particular lies in the range from 1 to 8 J/cm$^2$ and in particular in the range from 2 to 6 J/cm$^2$.

**8.** Method according to one of the preceding claims, wherein the pulse length lies in the range from 10 to 100 ns.

**9.** Method according to one of the preceding claims, wherein the wavelength of the electromagnetic radiation lies in the NIR and in particular in the range from 0.8 to 2.5 $\mu$m.

**10.** Method according to one of the preceding claims, wherein the tin-plated steel sheet is present in the form of a tinplate panel or frame, on which one or more strips (3) of the coating (2) are released from the surface of the tin-plated steel sheet by irradiating electromagnetic radiation in order to generate strip-like, coating-free recesses on the tinplate panel or frame.

**11.** Method according to claim 10, wherein the width of the or each strip (3) lies in the range from 1 to 8 mm and in particular between 3 and 7 mm.

**12.** Method according to claim 7 or 8, wherein in a first region (3a) of the or each strip (3), a lower energy density and in a second region (3b) of the strip (3), a higher energy density of electromagnetic radiation is irradiated, wherein the higher energy density suffices in order to vaporise the tin of the tin coating (1b) at least on the surface and thus to burst off the organic coating (2).

**13.** Method according to one of the preceding claims, wherein removal of the organic material of the coating (2) released from the tin layer (1b) is effected by suction or blowing.

**14.** Method according to one of the preceding claims, wherein the organic material of the coating (2) is selected from an organic lacquer, in particular from the group of vinyl lacquers, epoxy lacquers or epoxy phenolic resin lacquers, or polymer materials, in particular PET, PP and PE.

**Revendications**

**1.** Procédé d'élimination d'un revêtement (2) adhérent à la surface d'une tôle d'acier (1) étamée en un matériau organique, en particulier d'un vernis organique ou d'un revêtement en polymère, avec les étapes suivantes :

- la fusion de la couche d'étain (1b) de la tôle d'acier (la) étamée par irradiation d'un rayonnement électromagnétique pulsé avec une fréquence d'impulsion dans la plage de 1 à 100 kHz et une longueur d'impulsion dans la plage de 1 à 1 000 ns ainsi qu'une longueur d'onde prédéfinie, pour laquelle le revêtement organique (2) est au moins sensiblement transparent, dans lequel le revêtement organique (2) se détache de la couche d'étain (1b),
- l'élimination du matériau organique du revêtement (2) détaché de la couche d'étain (1b).

**2.** Procédé selon la revendication 1, dans lequel la couche d'étain (1b) est chauffée par l'irradiation du rayonnement électromagnétique au moins sur la surface à des températures au-dessus du point de fusion de l'étain ou la couche d'étain (1b) est fondue sur son épaisseur entière.

**3.** Procédé selon la revendication 1 ou 2, dans lequel l'irradiation du rayonnement électromagnétique est effectuée sur une durée de rayonnement prédéfinie et limitée.

**4.** Procédé selon la revendication 3, dans lequel la couche d'étain fondue refroidit après expiration de la durée de rayonnement à des températures inférieures au point de fusion de l'étain, par quoi la couche d'étain fondue se solidifie à nouveau.

**5.** Procédé selon l'une des revendications précédentes, dans lequel le revêtement (2) se détache, par la fusion de la couche d'étain (1b), de la surface de la couche d'étain (1b).

**6.** Procédé selon l'une des revendications précédentes, dans lequel la densité d'énergie du rayonnement électromagnétique est sélectionnée de sorte que l'étain de la couche d'étain (1b) se vaporise sur la surface et ainsi le revêtement (2) soit éjecté de la surface de la couche d'étain (1b).

**7.** Procédé selon la revendication 6, dans lequel la densité d'énergie du rayonnement électromagnétique est supérieure à 4 J/cm$^2$ et se trouve en particulier dans la plage de 1 à 8 J/cm$^2$ et en particulier dans la plage de 2 à 6 J/cm$^2$.

**8.** Procédé selon l'une des revendications précédentes, dans lequel la longueur d'impulsion se trouve dans la plage de 10 à 100 ns.

**9.** Procédé selon l'une des revendications précédentes, dans lequel la longueur d'onde du rayonnement électromagnétique se trouve dans le NIR et en particulier dans la plage de 0,8 à 2,5 $\mu$m.

**10.** Procédé selon l'une des revendications précédentes, dans lequel la tôle d'acier étamée se présente sous la forme d'une tôle ou d'un cadre de fer-blanc, sur laquelle ou lequel une ou plusieurs bandes (3) du revêtement (2) sont détachées par irradiation du rayonnement électromagnétique de la surface de la tôle d'acier étamée afin de générer sur la tôle ou le cadre de fer-blanc des évidements en forme de bande, sans revêtement.

**11.** Procédé selon la revendication 10, dans lequel la largeur de la ou de chaque bande (3) se trouve dans la plage de 1 à 8 mm et en particulier entre 3 et 7 mm

**12.** Procédé selon la revendication 7 ou 8, dans lequel dans une première zone (3a) de la ou de chaque bande (3) une densité d'énergie plus faible et dans une seconde zone (3b) de la bande (3) une densité d'énergie plus élevée du rayonnement électromagnétique sont irradiées, dans lequel la densité d'énergie plus élevée suffit afin de vaporiser l'étain du revêtement d'étain (1b) au moins sur la surface et d'éjecter ainsi le revêtement organique (2).

**13.** Procédé selon l'une des revendications précédentes, dans lequel l'élimination du matériau organique du revêtement (2) détaché de la couche d'étain (1b) est effectuée par aspiration ou soufflage.

**14.** Procédé selon l'une des revendications précédentes, dans lequel le matériau organique du revêtement (2) est sélectionné à partir d'un vernis organique, en particulier à partir du groupe de vernis de résine de vinyle, époxy ou époxy-phénol, ou matériaux de polymère, en particulier PET, PP et PE.

**Fig. 1**

(a)

(b)

Fig. 2

**Fig. 3a**

**Fig. 3b**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9802261 A1